# EUROPEAN PATENT APPLICATION

(11) **EP 0 773 119 A1**
(43) Date of publication of application: **14.05.1997**
(21) Application number: 96308074.2
(22) Date of filing: 06.11.1996
(51) Int. Cl.: B60G 7/02, B60G 11/27, B62D 21/02

(54) **Improvements relating to vehicle air suspension**

(30) Priority: 09.11.1995 GB 9522962
(71) Applicant: ROR ROCKWELL LIMITED, Llay, Wrexham, Clwyd LL12 0PB (GB)
(72) Inventor: Peaker, Martin Laurence, Upton, Chester, CH2 1NE (GB); Bell, Paul William, Rossett, NR. Wrexham, Clwyd, LL12 0EL (GB)
(74) Representative: Stonehouse, Sidney William

(57) **Abstract**

A bracket (1,2) for a vehicle air suspension comprises a hollow body (13) of aluminium which is adapted to be fixed at its top to a vehicle chassis member, has two opposed side walls (16,17) carrying co-axial bearings (24) at lower ends for a pivot of a trailing arm, and has rigidly retained to and between the side walls a stiffening member (28) of plate form made of aluminium. A lower portion (29) of the stiffening member extends around and below the bearings (24) and an upper portion (30) extends to the top of the body (13) radially of the bearings. The stiffening member strengthens the bracket (1,2) to withstand lateral loading in use. Its preferred form and arrangement concentrates the lateral loading in a plane containing the axis of the bearings (24) and extending through the upper portion (30).

A vehicle air suspension including two of the brackets (1,2) has the brackets connected in fixed spaced relationship by a substantially rigid cross member (3), also made of aluminium, which is connected to proximal side walls (16) of the brackets and has part of its cross-section shaped to correspond with, and align with, the lower portions (29) of the stiffening members (28).

## Description

This invention relates to vehicle air suspension of the kind comprising a bracket which secures to and depends from a chassis member of a vehicle, a trailing arm which extends generally longitudinally of the vehicle and is mounted on the bracket for pivoting relative thereto about a pivotal axis generally transverse of the vehicle, and an air spring which is carried by the trailing arm rearwards of the pivotal axis to act between the vehicle's chassis and the trailing arm. Such a vehicle air suspension is hereinafter referred to as "of the kind described".

An axle for rotatably mounting a road wheel is secured to the trailing arm rearwards of the pivotal axis for use of a vehicle air suspension of the kind described on a vehicle. The axle may be a stub axle.

A vehicle air suspension of the kind described may comprise two of the brackets, one for each side of a vehicle, having respective trailing arms pivoted to them about a common pivotal axis, and each trailing arm carrying an air spring rearwardly of the pivotal axis. In such an arrangement each of the trailing arms may have a respective stub axle secured to it, or the two trailing arms may have one axle secured to them which extends between and beyond the trailing arms and carries two or more road wheels.

Conventionally vehicle chassis have been constructed from steel members and the or each bracket of a vehicle air suspension of the kind described has similarly been made of steel, usually steel plate. Usually the or each bracket is welded to a chassis member. However, with an increasing need to save weight in vehicles, particularly in freight carrying vehicles, vehicle chassis are being made more often now of aluminium alloy, and there is a need for the brackets also to be made of aluminium alloy (hereafter referred as aluminium for convenience).

A difficulty arising from the use of aluminium in the manufacture of the brackets has been to provide sufficient strength in the brackets to resist the loading to which they are subjected in use, especially laterally of the brackets. The present invention addresses this difficulty.

According to a first aspect of the present invention a bracket is provided adapted for use in a vehicle air suspension of the kind described, characterised in that it comprises a hollow body made of aluminium having a top adapted to be fixed to a chassis member of a vehicle and extending downwards from the top two opposed side walls carrying at lower parts thereof co-axial bearings for a pivot of a trailing arm of the vehicle air suspension, and rigidly retained to and between the side walls a stiffening member of plate form made of aluminium having a lower portion which extends around and below the bearings and an upper portion which extends to the top of the body radially of the bearings.

The stiffening member gives appreciable strength to the bracket to withstand lateral loading when in use. Preferably the form of the stiffening member and its arrangement in the body of the bracket is such that lateral loading on the bracket when it is mounted for use will be concentrated essentially in a plane which contains the common axis of the bearings and extends through the upper portion of the member, or substantially so. Preferably the upper portion extends perpendicularly of the top of the body. Thus, when the top is secured in a horizontal plane to a chassis member of a vehicle, the upper portion of the stiffening member then extends vertically relative to the common axis of the bearings so as to be in the optimum position for taking lateral loading on the bracket, and to avoid off-line loading on the bracket which can create undesirable couples.

Extending of the lower portion of the stiffening member around and below the bearings strengthens the lower parts of the side walls of the body.

Preferably the lower portion extends arcuately, substantially co-axially, about the bearings. Ideally there is a curved transition between the lower and upper portions of the stiffening member. The stiffening member may be welded to the opposed side walls of the body. The preferred form of the stiffening member enables good continuous welds to be formed between the member and the side walls along at least most of the depth of the stiffening member.

Preferably the top of the bracket is adapted to be welded to a chassis member. It is desirable for the top to present a continuous profile which is smoothly defined and planar in order for a good continuous weld to be achieved.

The body may be of elongated horizontal cross-section the opposed side walls forming the opposite longer sides of that cross-section. The hollow form of the body may taper downwardly from the top and may have substantially closed walls joining the opposed side walls. Preferably the depth of the body from the top to the bearings is as great as is practicably possible for the vehicle air suspension for which it is adapted to be used. It is also desirable for the fore and aft dimension of the top of the body to be as great as possible to aid security of the bracket's joint at a chassis and resistance to couple stresses at the joint.

In a preferred embodiment of the bracket the body comprises two mirror image shells formed from aluminium sheet material. The shells are butt-welded together to present the elongated horizontal cross-section referred to above, tapering downwardly from the top of the body. Although the shells may be joined together at the opposed side walls of the body, it is preferred to join them at the narrower ends of the cross-section.

The bearings may be of steel, preferably stainless steel. They may be located in complementary holes in the opposed side walls and be retained in the holes by friction. Each bearing may comprise two components of top hat shape which are inserted in a hole in the respective side wall from opposite sides of the wall, and overlie the surfaces of the wall around the hole to protect the side wall from wear by a trailing arm pivoted to the bracket at the bearings.

Additional locations may be provided in the opposed side walls for a suspension damper to be pivotally connected to the bracket.

According to a second aspect of the present invention a vehicle air suspension is provided of the final described characterised in that the bracket is in accordance with the first aspect of the invention herein set forth and the trailing arm is pivoted to the bracket at the bearings thereof.

The vehicle air suspension may include an axle mounted on the trailing arm.

A brace may be fixed to and extend from the body of the bracket to be anchored to a suitable part of the chassis of the vehicle to which the suspension is fitted for use. The brace enhances the rigidity of the fixed bracket against tilting under lateral loading.

According to a third aspect of the invention a vehicle suspension is provided of the kind described which comprises two of the brackets, for opposite longitudinal sides of a vehicle, two of the trailing arms and air springs carried by the trailing arms, and is characterised in that the brackets are each in accordance with the first aspect of the present invention and the trailing arms are pivoted to their respective brackets at the bearings thereof.

Each trailing arm may have a stub axle mounted on it. Alternatively the two trailing arms may have an axle secured to them which extends between and beyond the trailing arms for carrying two or more road wheels.

Each of the brackets may have a brace fixed to its body which extends laterally from the body for anchorage to a suitable part of the chassis. Alternatively the brackets may be connected together in a fixed spaced relationship by means of a substantially rigid cross member. The cross member can stiffen the brackets further, assist resistance to tilting forces on the brackets under lateral loading and also serve to set the pivots of the trailing arms in correct relative positions. Preferably the cross member is made of aluminium. Such a cross member is conveniently welded at its ends to the brackets, at the proximal side walls of the brackets. The cross member may be made from sheet aluminium material, which may be of similar thickness to sheet material used for the bodies of the brackets and/or for the stiffening members of the brackets. For increased effectiveness in withstanding lateral loading and to be torsionally compliant, the sheet material is preferably shaped to correspond for at least part of its cross-section, transversely of its length, to the shape of the lower portions of the stiffening members, and the cross member is fixed to the side walls of the brackets so that its common shaping is directly aligned with the lower portions of the stiffening members. Torsional compliance is desirable to avoid loading on the cross member from the brackets which should be taken by the chassis. Above the level of the lower portions the shaping of the cross-section of the cross member may follow that of the upper portions of the stiffening members, or it may deviate from that shape. It may, for example, extend obliquely to the upper portions away from the common shaping, and then transversely of the upper portions so as to enhance the rigidity of the cross-member longitudinally of the vehicle to which the suspension is fitted for use. At the brackets, where the loading of the cross member is greatest for the fitted suspension, the cross member is preferably of a depth to extend for the full, or the greater part of the, depth of the brackets. In order that the air suspension may be adapted for fitting to a range of vehicles having varying suspension installation requirements, the brackets and cross member may be made such that the brackets project above the ends of the cross-member and can have their depths reduced at the upward projections to suit a particular installation.

As in the case of the stiffening members, for a good welded joint between the cross member and the brackets, it is desirable that the cross member should present a smooth profile along which continuous welds can be produced along the full depth of the cross member. Instead of welding the cross member directly to the side walls of the brackets, pads of larger surface area than the ends of the cross member may be welded on to the side walls, and the cross member may be welded to the pads, thereby reducing the concentration of welding on the side walls, and the risk of weld distortion of the side walls.

Loading on the cross member when the suspension is in use decreases towards the centre of its length and so the depth of the cross member may be reduced at its medial region.

Instead of having the cross member and stiffening members as separate components, they may be provided integrally by one component which extends between the brackets, through the proximal side walls of the bodies of the brackets and across the interiors of the bodies to the opposite side walls. Conveniently the component is welded throughout its cross-sectional profile to the two side walls of each of the brackets.

According to a fourth aspect of the present invention a vehicle is provided which is characterised in that it includes a vehicle air suspension in accordance with the third aspect of the invention herein set forth.

An embodiment of the invention will now be described, by way of example only, with reference to the accompanying drawings, in which,
**Figure 1** is a simplified, partially sectioned, side view of part of a vehicle chassis to which is fitted a vehicle air suspension in accordance with the third aspect of the invention;
**Figure 2** is a rear view of part of the suspension;
**Figures 3, 4 and 5** are respectively side, rear and plan views of a bracket of the suspension;
**Figures 6 and 7** are enlarged side and rear views respectively of a stiffening member of the bracket, and
**Figures 8 and 9** are side and rear views respectively of a cross member of the suspension.

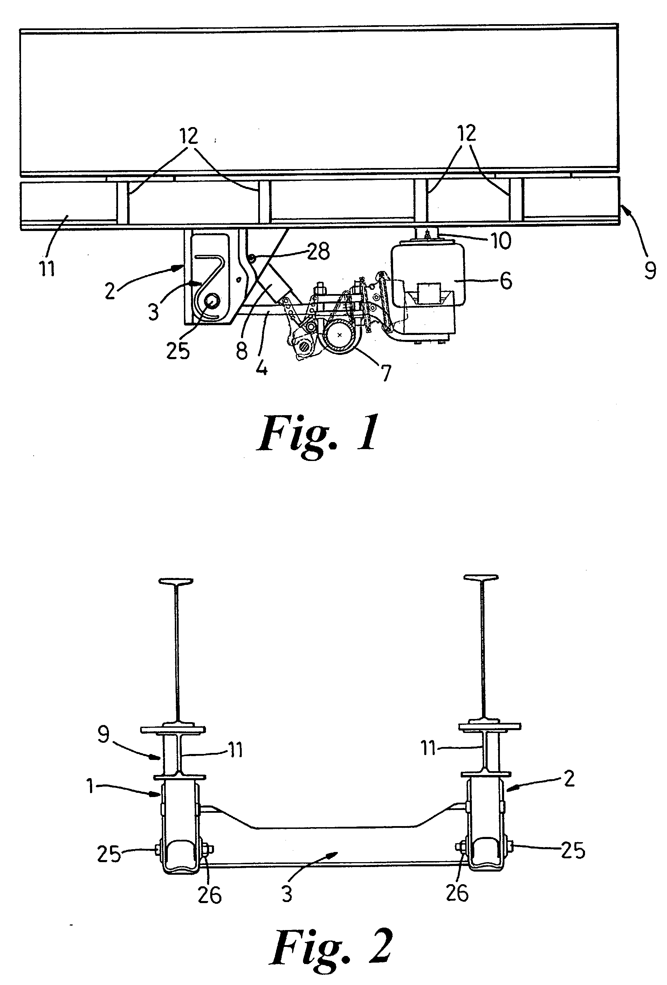

Referring to Figures 1 and 2 of the drawings, a vehicle air suspension is shown which comprises a pair of spaced brackets 1, 2 connected by a cross member 3, each bracket having pivoted thereto a respective trailing arm 4 on which is mounted an air spring 6 (only one is shown), and the trailing arms having an axle 7 clamped transversely to them intermediate the brackets and the air springs. A telescopic suspension damper 8 is pivotally connected between each bracket 1, 2 and the axle 7.

The suspension is fixed to the underside of a vehicle chassis 9 by the brackets 1, 2 and by mountings 10 of the air springs 6. The chassis 9 may be composed of connected aluminium longitudinal and lateral chassis members 11, 12 respectively.

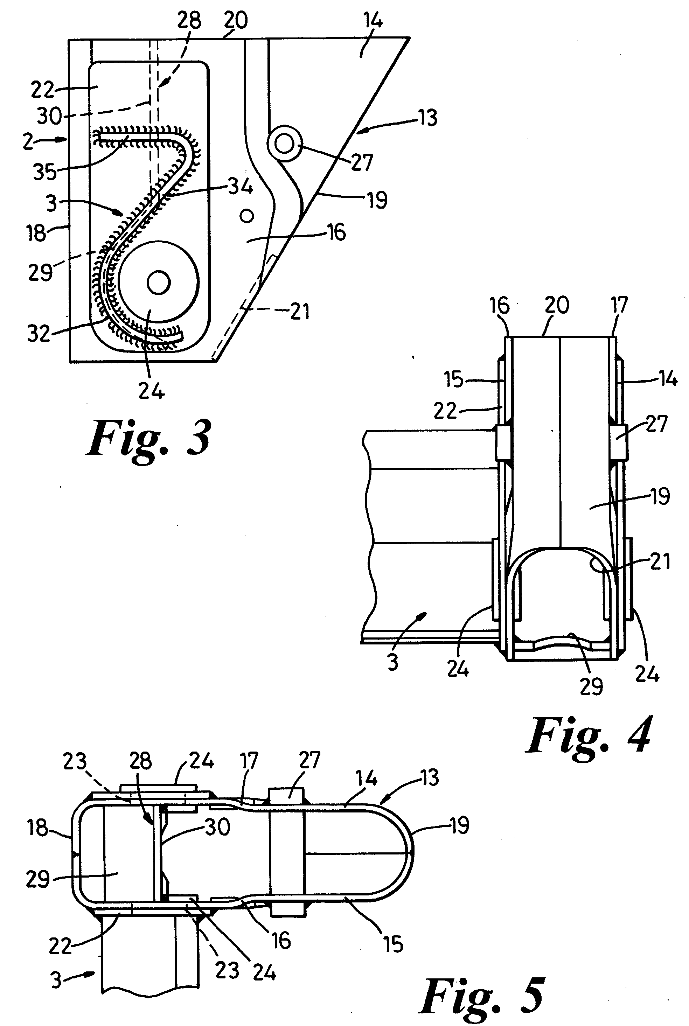

The brackets 1, 2 are similar. Each bracket has a body 13, as shown in Figures 3 to 5, made from two shells 14, 15 of mirror image shapes formed from aluminium sheet material. The body so made is tubular comprising two upright, parallel, opposed, inner and outer, side walls 16, 17, an upright front wall 18 and a downwardly and inwardly inclined rear wall 19. A generally rectangular cross-section is presented elongated in the fore and aft direction of the bracket and tapering downwards from a flat top 20 of the body. The shells 14, 15 are welded together centrally along the front and rear walls 18, 19. There are rounded corners between the front wall and the two side walls 16, 17, and the rear wall is rounded outwardly between the side walls. At the top 20 and its bottom the body is open. The top 20 is substantially larger than the bottom so that a profile of good size is provided for the bracket to be welded at the top to a chassis member. A continuous smooth weld can be made all around the top 20 to secure the bracket soundly to the chassis. Rear wall 19 stops short of the bottom of the body 13 to leave an opening 21 at which the forward end of the respective trailing arm 4 enters into the lower end of the body.

An elongated pad 22 is welded on the outside of the inner side wall 16 of the body of each bracket. The pad 22 is positioned adjacent to the front wall 18 and extends almost the full depth of the side wall from the top 20 to the bottom of the body.

Co-axial holes 23 are formed in the side walls 16, 17 at their lower parts. The hole at the inner side wall also extends through the pad 22. Secured in the holes 23 are bearings 24 which receive pivot bushes, not shown, and a pivot bolt 25, Figure 2, secured by a nut 26, by which the forward end of the trailing arm 4 is pivotally connected to the bracket. Each bearing 24 comprises two stainless steel components of top-hat shape which are inserted into the respective hole 23 from opposite ends of the hole and provide protective annular flanges around the hole at the faces of the outer side wall 17 and at the inner face of the inner side wall 16 and the exposed face of the pad 22. The components of each bearing are made slightly over-size for the holes to achieve an interference fit. They may be fitted into the holes in a contracted state after having first been cooled, for example in liquid nitrogen. As the components subsequently return to normal temperature and expand they become securely held in the holes.

A tubular aluminium bush 27 extends between and through the side walls at their upper parts, near to the rear wall 19. The bush 27 is welded to the side walls. It receives a bolt 28, Figure 1, by which the respective suspension damper 8 is connected to the bracket.

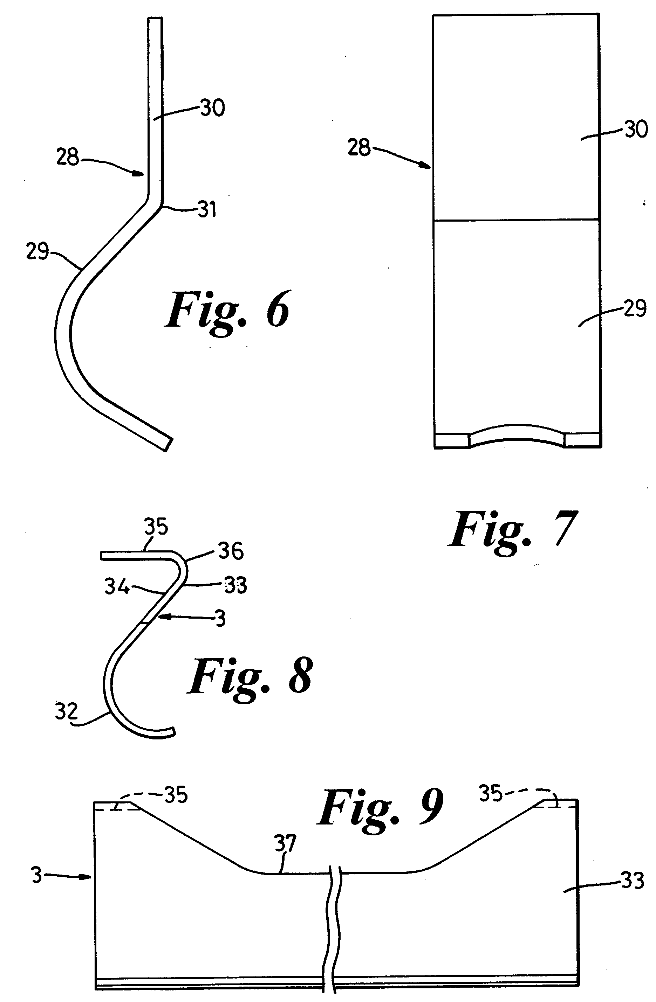

Welded inside the body of each bracket is a stiffening member 28 formed from aluminium sheet material. The stiffening member extends between the two side walls 16, 17 and for almost the full depth of the body from the top 20. As best seen in Figure 6, the stiffening member has an arcuate lower portion 29 and a straight, vertical, upper portion 30 which extends radially of the axis of curvature of the lower portion 29 and joins the lower portion at a radiused bend 31. The stiffening member is fixed in the body such that the arcuate lower portion 29 extends around and below the bearings 24, towards the front wall 18, its axis of curvature co-axial with the common axis of the bearings, and the upper portion 30 extends vertically, perpendicularly, to the top 20 of the body radially of the common axis of the bearings. Ample clearance is allowed between the lower portion 29 and the forward end of the trailing arm to avoid any interference between them. By its positioning and form the stiffening member strengthens the bracket substantially to resist distorting forces under lateral loading on the bracket when the suspension is in use. The form of the member also enables it to be secured to the side walls 16, 17 by good smooth and continuous welds all around the side edges of the member to the extent that access allows.

Fixed to and extending between the two brackets 1, 2 is the cross member 3 which is also made of aluminium sheet material. As shown in Figures 8 and 9, the cross member 3 is shaped so that at its opposite end portions it has a cross-section in the shape of an inverted figure two. A lower portion 32 of the cross section is arcuately curved throughout the length of the cross member similarly to the lower portions 29 of the stiffening members 28 in the brackets. An upper portion 33 of the cross section comprises an inclined part 34 which extends through a vertical plane containing the axis of curvature of the arcuately curved lower portion 32, and, at the opposite end portions of the cross member, a horizontal part 35 joined to the top of the inclined part 34 by a well rounded bend 36. The depth of the cross member is reduced at an intermediate part of its length by a recess 37, Figure 9, cut into the upper portion 33. The recess 37 gradually deepens down from the opposite end portions of the cross member almost to the arcuately curved lower portion at the medial region of the cross member. Ends of the cross member are welded to the pads 22, as shown in Figure 3. A good, smooth, continuous weld can be provided all around each of the ends because of the cross-sectional shape of the cross member. Welding the cross member to the pads avoids the risk of distortion of the inner side walls. The welded ends are so positioned at the brackets that the lower portion 32 of the cross member is in direct alignment with the lower portion 29 of the stiffening members 28. At the end portions, the cross member extends for the greater part of the depth of the brackets. The cross member is consequently strengthened where the loading on the cross member is greatest when the suspension is in use.

Rigidity of the brackets when fixed to the chassis is enhanced by the cross member so that tilting forces on the brackets under lateral loading are strongly resisted. The cross member not only has substantial stiffness against lateral loading but it is also compliant torsionally and vertically. The fitted suspension has no welded or other direct connection with the chassis at the cross members, thereby leaving the cross member free of stresses that such connections could produce for its maximum strength to be available to take lateral loading between the brackets. Since the cross member and stiffening members are aligned, bending between them is avoided and consequent stressing at the brackets.

Aluminium sheet material used for the cross member may be of similar thickness to the material used for the bracket bodies and stiffening members.

The aluminium brackets and cross member provide appreciable saving in the weight of the suspension whilst affording considerable strength and stability under loading exerted on the fitted suspension in the course of its use.

## Claims

1. A bracket adapted for use in a vehicle air suspension of the kind described, characterised in that it comprises a hollow body (13) made of aluminium having a top (20) adapted to be fixed to a chassis member of a vehicle and extending downwards from the top two opposed side walls (16,16) carrying at lower parts thereof co-axial bearings (24) for a pivot of a trailing arm of the vehicle air suspension, and rigidly retained to and between the side walls a stiffening member (28) of plate form made of aluminium having a lower portion (29) which extends around and below the bearings and an upper portion (30) which extends to the top of the body radially of the bearings.

2. A bracket according to claim 1 characterised in that the stiffening member (28) is of a form, and is arranged in the body (13), to concentrate lateral loading on the bracket in use in a plane which contains the common axis of the bearings (24) and extends through the upper portion (30) of the stiffening member, or substantially so.

3. A bracket according to claim 1 or claim 2 characterised in that the upper portion (30) of the stiffening member (28) extends perpendicularly of the top (20) of the body (13).

4. A bracket according to any preceding claim characterised in that the lower portion (29) of the stiffening member (28) extends arcuately, substantially co-axially, about the bearings (24).

5. A bracket according to any preceding claim characterised in that there is a curved transition (31) between the lower portion (29) and the upper portion (30) of the stiffening member (28).

6. A bracket according to any preceding claim characterised in that the stiffening member (28) is welded to the opposed side walls (16,17) by continuous welds extending along at least most of the depth of the stiffening member.

7. A bracket according to any preceding claim characterised in that the top (20) of the body (13) presents a continuous profile which is smoothly defined and planar for continuous welding to a chassis member of a vehicle.

8. A bracket according to any preceding claim characterised in that the body (13) is of a cross-section which is elongated horizontally in the position of use of the bracket and the two opposed side walls (16,17) form the longer sides of that cross-section.

9. A bracket according to any preceding claim characterised in that the body (13) tapers downwardly from the top (20).

10. A bracket according to any preceding claim characterised in that the body (13) has substantially closed walls (18,19) joining the two opposed walls (16,17).

11. A bracket according to any preceding claim characterised in that the body (13) comprises two mirror image shells (14,15) formed from aluminium sheet material and joined together.

12. A bracket according to claim 11 as dependent from claim 10 characterised in that the two shells (14,15) are joined together at the substantially closed walls (18,19).

13. A bracket according to any preceding claim characterised in that the two opposed side walls (16,17) are formed with holes (23) in which the bearings (24) are retained by friction.

14. A bracket according to claim 13 characterised in that the bearings (24) each comprise two components of top hat shape which are inserted in the respective hole (23) from opposite sides of the respective side wall (16,17) and overlie the surfaces of the side wall around the hole.

15. A bracket according to any preceding claim characterised in that the two opposed side walls (16,17) have locations whereby a suspension damper can be pivotally connected to the bracket.

16. A vehicle air suspension comprising a bracket (1,2) which secures to and depends from a chassis member of a vehicle, a trailing arm (4) which extends generally longitudinally of the vehicle and is mounted on the bracket for pivoting relative thereto about a pivotal axis generally transverse of the vehicle, and an air spring (6) which is carried by the trailing arm rearwards of the pivotal axis to act between the vehicle's chassis and the trailing arm, characterised in that the bracket (1,2) is in accordance with the bracket claimed in any of claims 1 to 15 and the trailing arm (4) is pivoted to the bracket at the bearings (24) thereof.

17. A vehicle air suspension according to claim 16 characterised in that an axle (7) is mounted on the trailing arm (4).

18. A vehicle air suspension comprising two brackets (1,2) which secure to and depend from chassis members at opposite longitudinal sides of a vehicle, two trailing arms (4) which extend generally longitudinally of the vehicle and are mounted on the respective brackets for pivoting relative thereto about a pivotal axis generally transverse of the vehicle, and air springs (6) carried by the trailing arms rearwards of the pivotal axis to act between the vehicle's chassis and the trailing arms, characterised in that the brackets (1,2) are each in accordance with the bracket claimed in any of claims 1 to 15 and the trailing arms (4) are pivoted to the respective brackets at the bearings (24) thereof.

19. A vehicle air suspension according to claim 18 characterised in that an axle (7) extends between and is secured to the trailing arms (4) and extends beyond the trailing arms for carrying road wheels.

20. A vehicle air suspension according to claim 18 or claim 19 characterised in that the brackets (1,2) are connected together in a fixed spaced relationship by means of a substantially rigid cross member (3).

21. A vehicle air suspension according to claim 20 characterised in that the cross member (3) is made of aluminium.

22. A vehicle air suspension according to claim 20 or claim 21 characterised in that the cross member (3) is shaped to correspond for at least part (32) of its cross-section, transversely of its length, to the shape of the lower portions (29) of the stiffening members (28), and the cross member is fixed to proximal ones of the opposed side walls (16,17) of the brackets so that its correspondingly shaped part (32) is directly aligned with the lower portions of the stiffening members.

23. A vehicle air suspension according to claim 22 characterised in that the cross member (3) has part of its cross-section shaped to correspond, and to align, with the upper portions (30) of the stiffening members (28).

24. A vehicle air suspension according to claim 22 characterised in that the cross member (3) has a part (34) of its cross-section shaped to extend obliquely to the upper portions (30) of the stiffening members (28), away from the correspondingly shaped part (32), and a part (35) of its cross-section adapted to extend transversely of the upper portions (30) of the stiffening members.

25. A vehicle air suspension according to any of claims 20 to 24 characterised in that at least at the brackets the cross member (3) extends for at least the greater part of the depth of the brackets (1,2).

26. A vehicle air suspension according to any of claims 20 to 25 characterised in that pads (22) of larger surface area than the ends of the cross member (3) are welded to and between the ends of the cross member and proximal ones of the opposed side walls (16,17) of the brackets (1,2).

27. A vehicle air suspension according to any of claims 20 to 26 characterised in that the cross member (3) is integral with the stiffening members (28).

28. A vehicle characterised in that it includes a vehicle air suspension in accordance with any of claims 20 to 27.
